# EUROPEAN PATENT APPLICATION

(11) **EP 0 545 249 A1**
(43) Date of publication of application: **09.06.1993**
(21) Application number: 92120070.5
(22) Date of filing: 25.11.1992
(51) Int. Cl.: B29B 9/06

(54) **Appartus for granulating plastic material, particularly linear polyesters and polyamides**

(30) Priority: 02.12.1991 IT BO910449
(71) Applicant: F.B.M. FABBRICA BONDENESE MACCHINE S.r.l., I-44012 Bondeno (Ferrara) (IT)
(72) Inventor: Garutti, Gianni, I-44028 Poggio Renatico (Ferrara) (IT); Monari, Claudio, I-44012 Bondeno (Ferrara) (IT)
(74) Representative: Modiano, Guido, Dr.-Ing.

(57) **Abstract**

The apparatus for granulating plastic material, particularly for linear polyesters and polyamides, comprises a first hollow horizontal cylindrical body (1) inside which a tubular core (3) is axially accommodated; an annular chamber (11) is defined between the body and the core, is connected to a channel (2) for feeding plastic material and is closed frontally by an extrusion plate (12) having a series of extrusion holes (14) connected to said annular chamber; the core is crossed by a driven shaft (15) which has, on its front end, a blade-supporting head (20) which cooperates with the extrusion plate; the annular chamber is externally delimited by a hollow cylindrical body (7) in which at least one chamber (36,37;49) is defined; the chamber is coaxial to the shaft and is connected to a supply of a diathermic liquid whose temperature is correlated to the required granulation temperature.

## Description

The present invention relates to an apparatus for granulating plastic material, particularly linear polyesters and polyamides.

Current apparatuses are not suitable to granulate certain plastic materials, such as linear polyesters and polyamides, since the heat dispersions of the extrusion plate do not allow to keep the temperature of the material within the range in which granulation can be performed.

The aim of the present invention is therefore to provide an apparatus for granulating plastic materials which provides a temperature suitable for extrusion and direct granulation of extruded thread-like profiles.

Within the scope of this aim, an object of the invention is to provide an apparatus which is simple in concept and safely reliable in operation.

This aim and this object are achieved, according to the invention, by the present apparatus for granulating plastic materials, particularly linear polyesters and polyamides, characterized in that it comprises a first hollow horizontal cylindrical body inside which a tubular core is axially accommodated, an annular chamber being defined between said body and said core, said annular chamber being connected to a channel for feeding plastic material and being closed frontally by an extrusion plate having a series of extrusion holes connected to said annular chamber, said core being crossed by a driven shaft which has, at its front end, a blade-supporting head which cooperates with said extrusion plate, said annular chamber being externally delimited by a hollow cylindrical body in which at least one chamber is defined, said chamber being coaxial to said shaft and being connected to a supply of a diathermic liquid whose temperature is correlated to the required granulation temperature.

The characteristics and advantages of the present invention will become apparent from the following detailed description of a preferred embodiment thereof, illustrated only by way of non-limitative example in the accompanying drawings, wherein:
figure 1 is a longitudinal sectional view of the apparatus according to the invention;
figure 2 is a transverse sectional view, taken along the plane II-II of figure 1;
figure 3 is a longitudinal sectional view of a constructive variation of the granulation apparatus.

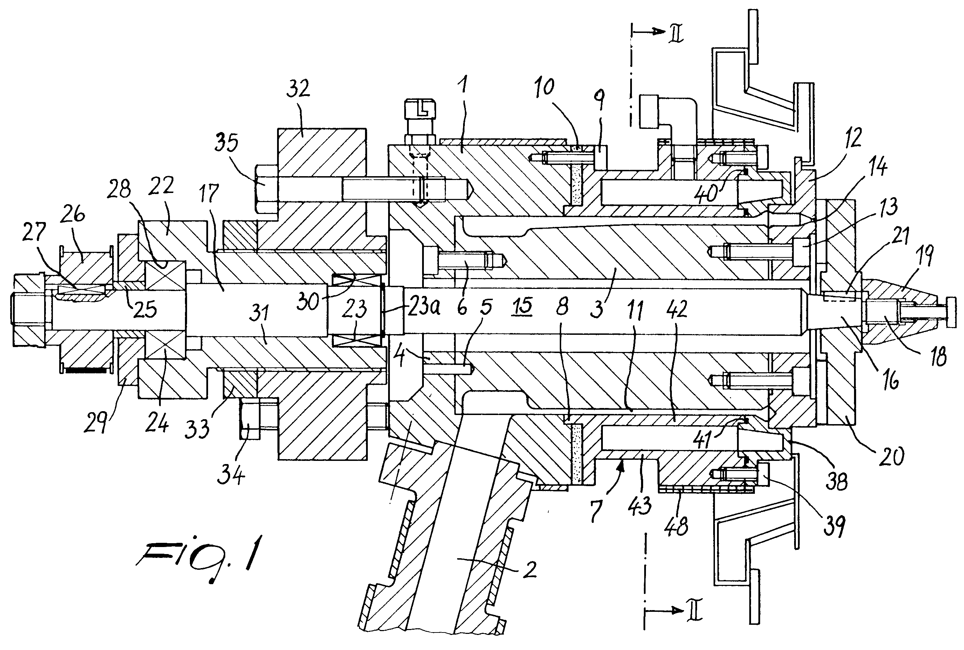

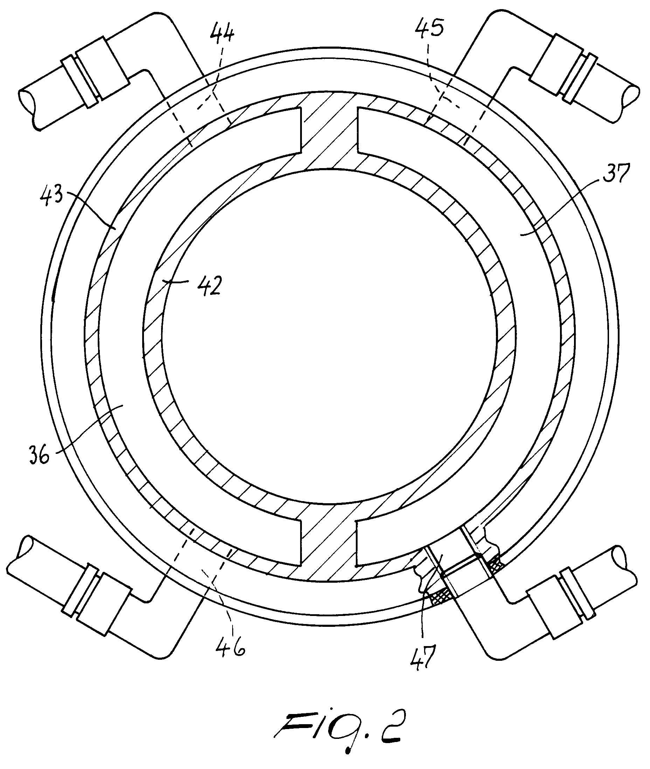

With reference to figures 1 and 2, the apparatus comprises a substantially cylindrical hollow body 1 which is supported in a horizontal position by a base which is not illustrated. The inside of the body 1 is connected to a supply duct 2 connected to the rear end of said body.

Inside the body 1 there is a tubular core 3 which rests against the backplate 4 of the body 1, is centered by a dowel 5 and fixed with bolts 6. A second hollow cylindrical body 7 is supported around the front portion of the core 3, is centered on the body 1 by means of an axial collar 8 and is connected to the first body 1 by means of bolts 9. A gasket 10 for thermal insulation is interposed between the two bodies.

An elongated annular chamber 11 is thus defined between the core 3 and the bodies 1 and 7. The chamber 11 is connected to the duct 2 at the rear, whereas at the front it is closed by an extrusion plate 12 connected to the core 3 by screws 13. The extrusion plate 12 is in practice a plate provided with holes 14 which are axially aligned with the chamber 11 and are angularly distributed.

A coaxial shaft 15 is accommodated in the core 3, and its front end 16 extends beyond the extrusion plate 12, whereas its rear part 17 protrudes from the body 1.

The front end 16 has an axial terminal stem 18 which is externally threaded and on which a frustum-shaped nut 19 is screwed; said nut locks a blade-supporting head 20 which is applied on the shaft 15 and is keyed thereon by means of a key 21.

A device for adjusting the distance between the head 20 and the extrusion plate 12 is mounted on the rear part 17 of the shaft, and comprises a bush 22 which supports a front bearing 23 and a rear bearing 24 which is locked against a shoulder of the shaft by a nut which acts thereon with the interposition of a spacer 25 and of a toothed pulley 26 which is keyed on the end of the shaft 15 by a key 27. The pulley 26 is connected, by virtue of transmission means, to an electric motor, not illustrated, for the actuation of the shaft 15.

The bearing 24 is accommodated in a rear annular seat 28 defined in the bush 22 and is locked by a disk 29 connected to the rear end of said bush. The bearing 23 is accommodated in a front annular seat 30 of the bush 22 and is locked by a snap ring 23a mounted on the shaft 15.

The bush 22 has an externally threaded portion 31 on which a flange 32 is screwed and fixed by means of a counter-ring 33. The flange 32 is located at an adjustable distance from the body 1 by means of a series of screws 34 and 35: the screws 34 rest, with their end, against the rear face of the body 1, whereas the screws 35 are screwed in the flange 32 to connect said flange to the body 1.

A pair of semi-cylindrical chambers 36 and 37 is defined in the wall of the cylindrical body 7; said chambers are blind and closed at the front by an annular cover 38 which is fixed, by means of screws 39, with the interposition of gaskets 40 and 41 which adhere to the front edge of the walls 42 and 43 which internally and externally delimit the chambers 36 and 37. Each chamber 36 and 37 has an upper opening 44 and 45 and a lower opening 46 and 47 to which respective couplings are connected for the entry and exit of a diathermic liquid, particularly oil, fed at a temperature suitable to facilitate the extrusion and granulation of the treated plastic material.

The oil inlets 44, 47 and the outlets 45, 46 are diametrically opposite for a more uniform distribution of the heat both circumferentially and longitudinally.

An electric resistor 48 is inserted in the outer surface of the cylindrical body 7, and the hardened plastic material left over from the previous processing in the chamber 11 is heated by means of said resistor during the startup of the apparatus.

The operation of the described apparatus can be easily deduced from the provided description.

In particular, it is noted that the material is kept at the appropriate extrusion temperature during its transit through the chamber 11 by the diathermic oil contained in the chambers 36 and 37, so as to avoid critical conditions in extrusion. The circulation of diathermic oil in the chambers 36 and 37 ensures the constant occurrence of the optimum extrusion temperature.

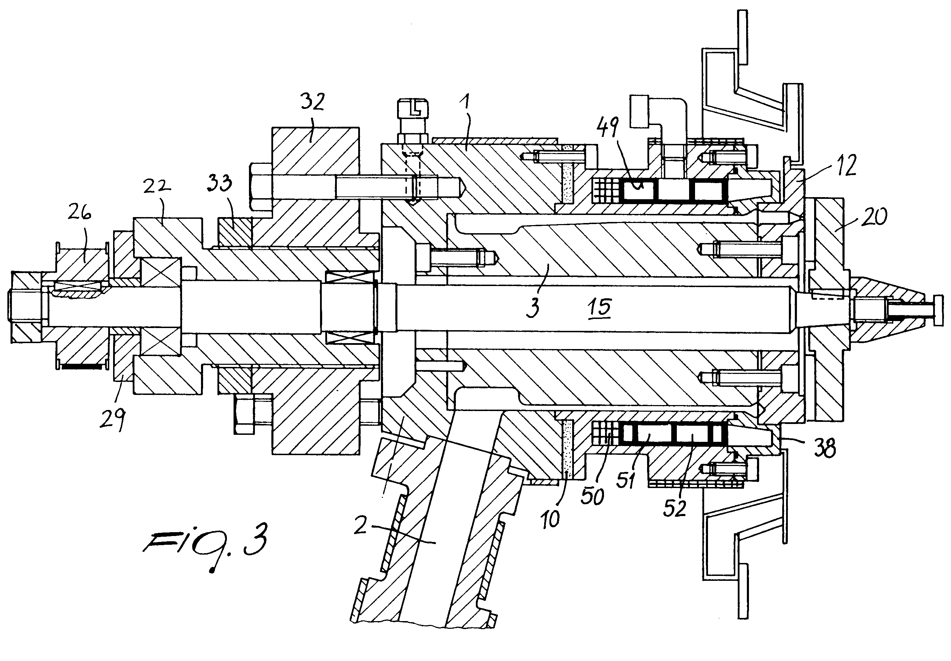

A variation of the apparatus, shown in figure 3, provides for the forming of an annular chamber 49 instead of the two chambers 36 and 37, and for the insertion in said chamber, after interposing a thermally insulating spacer 50, of a complementarily shaped box-like body which defines two ducts 51 and 52 having a rectangular cross-section.

The ducts 51 and 52 extend in a helical shape coaxially to the shaft 15 in opposite directions starting from a centerline plane of the body 7 so as to provide better thermal uniformity both in an axial direction and in a circumferential one.

The described apparatus perfectly achieves the intended aim and objects.

The possibility of maintaining the extrusion temperature in the extrusion plate at values comprised between 170 and 190^{o}, so as to ensure the granulation of materials such as linear polyesters and polyamides, for which only the immersion granulation method is currently provided, is particularly advantageous.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Apparatus for granulating plastic material, particularly for linear polyesters and polyamides, characterized in that it comprises a first hollow horizontal cylindrical body (1) inside which a tubular core (3) is axially accommodated, an annular chamber (11) being defined between said body and said core, said annular chamber being connected to a channel (2) for feeding plastic material and being closed frontally by an extrusion plate (12) having a series of extrusion holes (14) connected to said annular chamber, said core being crossed by a driven shaft (15) which has, on its front end, a blade-supporting head (20) which cooperates with said extrusion plate, said annular chamber being externally delimited by a hollow cylindrical body (7) in which at least one chamber (36,37;49) is defined, said chamber being coaxial to said shaft and being connected to a supply of a diathermic liquid whose temperature is correlated to the required granulation temperature.

2. Apparatus according to claim 1, characterized in that two semi-cylindrical chambers (36,37) are defined in the wall of said second cylindrical body, are coaxial to said shaft and are closed by a cover (38) which is centered and fixed, by means of screws (39), to the edge of said cylindrical body (7), said chambers being fed, in parallel and equally orientated directions, with said plastic material.

3. Apparatus according to claim 1, characterized in that a box-like body (49) is accommodated in said chamber and defines two ducts (51,52) which extend helically and are concentric with respect to said shaft.

4. Apparatus according to claim 3, characterized in that said ducts extend in opposite directions starting from a centerline plane of said box-like body.

5. Apparatus according to claim 4, characterized in that said box-like body is accommodated in said chamber after interposing a thermally insulating spacer (50).
